# DEMANDE DE BREVET EUROPEEN

(11) **EP 4 354 098 A1**
(43) Date de publication de la demande: **17.04.2024**
(21) Numéro de dépôt: 23201315.1
(22) Date de dépôt: 02.10.2023
(51) Int. Cl.: G01H 3/12, G01H 1/00

(54) **PROCÉDÉ ET DISPOSITIF DE DIAGNOSTIC SONORE D'UN AÉRONEF**

(30) Priorité: 10.10.2022 FR 2210331
(71) Demandeur: AIRBUS OPERATIONS (SAS), 31060 Toulouse (FR)
(72) Inventeur: LOCHERON, Marc, 31060 Toulouse (FR); ROUX-PORTALEZ, Fabien, 31060 Toulouse (FR); MARTINI, Clothilde, 31060 Toulouse (FR); HELFFER, Emmanuel, 31060 Toulouse (FR); JOUAN, Maxime, 31060 Toulouse (FR); SOUBKI, Adil, 31060 Toulouse (FR)
(74) Mandataire: Gevers & Orès

(57) **Abrégé**

- Procédé et dispositif de diagnostic sonore d'un aéronef.
- Le procédé comprend une étape (E1a) de mesure de signaux acoustiques (S) par une pluralité de microphones (2) montés à des positions (PS) différentes à l'intérieur de l'aéronef (AC), une étape (E3) d'enregistrement des signaux acoustiques (S) mesurés, une étape (E5) de calcul qui génère une cartographie sonore (CS) à partir des signaux acoustiques (S) mesurés, une étape (E6) de comparaison de la cartographie sonore (CS) et une cartographie de référence (CR) et une étape (E7) de transmission de la comparaison à un dispositif utilisateur (11). Le procédé permet de suivre l'évolution d'un bruit anormal ou d'un niveau anormal de bruit et d'aider à en déterminer le contexte.

## Description

### Domaine technique

La présente invention concerne un procédé et dispositif de diagnostic sonore d'un aéronef.

### État de la technique

De façon usuelle, avant sa livraison à un client ou au cours d'opérations de révision, on fait effectuer à un aéronef, notamment un avion de transport, des vols de test. Au cours de ces vols de test, on acquiert des données qui, une fois analysées, permettent de vérifier si l'aéronef remplit des critères de sécurité et de confort. Généralement, l'évaluation de ces critères se base sur l'acquisition et l'analyse, par un système dédié, de données relatives à des paramètres de l'aéronef les plus précises possibles. Il peut s'agir de paramètres tels que la vitesse, l'altitude de l'aéronef pendant le vol de test mais également le bruit ou les vibrations à l'intérieur de l'aéronef. La collecte et l'analyse de ces données permettent de décider si des améliorations ou des corrections doivent être réalisées avant la livraison ou la remise en service de l'aéronef.

Le niveau sonore à l'intérieur d'un aéronef est généralement déterminé par différents procédés de diagnostic. Par exemple, il peut être déterminé à l'aide d'un nombre limité de vols spécifiques sur certains aéronefs. Il peut être également déterminé par des enregistrements pendant un temps limité à l'aide d'un dispositif d'enregistrement portable lorsqu'un bruit anormal ou un niveau anormal de bruit est entendu lors d'un vol.

Ces procédés de diagnostics utilisés jusqu'à maintenant présentent des limitations. En effet, avoir un nombre limité de vols ayant un profil de vol spécifique peut empêcher la découverte des causes profondes du bruit anormal ou du niveau anormal de bruit car une configuration de l'aéronef pendant ces vols spécifiques peut ne pas être reproduite pendant un vol spécifique. De même, il peut être difficile de connaître le contexte d'un bruit anormal ou d'un niveau anormal de bruit lorsqu'un enregistrement est effectué pendant un temps limité au moment où le bruit anormal ou le niveau anormal de bruit est entendu.

Les procédés de diagnostics actuels ne sont donc pas pleinement satisfaisants.

### Exposé de l'invention

La présente invention concerne un procédé et un dispositif de diagnostic sonore d'un aéronef.

Selon l'invention, le procédé comprend les étapes suivantes :
- une étape de mesure en temps réel de signaux acoustiques par une pluralité de microphones destinés à être montés à des positions différentes à l'intérieur de l'aéronef ;
- une étape de réception, mise en oeuvre par une unité centrale, comportant la réception des signaux acoustiques mesurés par les microphones ;
- une étape d'enregistrement en temps réel, mise en oeuvre par une unité de stockage, comportant l'enregistrement en temps réel des signaux acoustiques mesurés reçus par l'unité centrale ;
- une étape de calcul, mise en oeuvre par une unité de calcul, comportant la génération d'une cartographie sonore à partir des signaux acoustiques mesurés et des positions des microphones ;
- une étape de comparaison, mise en oeuvre par une unité de comparaison, comportant la génération d'une cartographie de comparaison à partir de la comparaison entre la cartographie sonore et une cartographie de référence ;
- une étape de transmission, mise en oeuvre par une unité de transmission, comportant la transmission de la cartographie de comparaison à un dispositif utilisateur.

Ainsi, grâce à l'invention, il est possible de suivre l'évolution d'un bruit anormal ou d'un niveau anormal de bruit en temps réel et d'aider à en déterminer le contexte. De façon avantageuse, le procédé comprend en outre une étape de mesure en temps réel de signaux vibratoires par une pluralité de capteurs de vibration destinés à être montés à des positions différentes à l'intérieur de l'aéronef ;
l'étape de réception comportant en outre la réception en temps réel des signaux vibratoires mesurés par les capteurs de vibration ;
l'étape d'enregistrement comportant en outre l'enregistrement en temps réel des signaux vibratoires mesurés reçus par l'unité centrale ;
la génération de la cartographie sonore dans l'étape de calcul étant réalisée à partir des signaux acoustiques mesurés, des positions des microphones, des signaux vibratoires mesurés et des positions des capteurs de vibration.

En outre, l'étape de réception comporte l'enregistrement en temps réel de paramètres de vol de l'aéronef.

Avantageusement, le procédé comprend en outre une étape de visualisation, mise en oeuvre par une unité de visualisation, comportant l'affichage en temps réel d'une représentation graphique d'au moins un des paramètres suivants : des signaux acoustiques mesurés, des positions des microphones, des signaux vibratoires mesurés et des positions des capteurs de vibration, des paramètres de vol de l'aéronef.

Par ailleurs, le procédé comprend en outre une étape de téléversement, mise en oeuvre par une unité de téléversement, comprenant le téléversement vers l'unité de calcul au moins des signaux acoustiques mesurés et des positions des microphones.

De plus, l'étape de téléversement comprend le téléversement vers l'unité de calcul en outre des signaux vibratoires mesurés, des positions des capteurs de vibration. En outre, l'étape de téléversement comprend le téléversement vers l'unité de calcul des paramètres de vol de l'aéronef.

L'invention concerne également un dispositif de diagnostic sonore d'un aéronef. Selon l'invention, le dispositif comporte :
- une pluralité de microphones destinés à être montés à des positions différentes à l'intérieur de l'aéronef, chacun des microphones étant configuré pour mesurer en temps réel un signal acoustique ;
- une unité centrale configurée pour recevoir les signaux acoustiques mesurés par les microphones ;
- une unité de stockage configurée pour enregistrer en temps réel les signaux acoustiques mesurés reçus par l'unité centrale ;
- une unité de calcul configurée pour générer une cartographie sonore à partir des signaux acoustiques mesurés et des positions des microphones ;
- une unité de comparaison configurée pour générer une cartographie de comparaison à partir de la comparaison entre la cartographie sonore et une cartographie de référence ;
- une unité de transmission configurée pour transmettre la cartographie de comparaison à un dispositif utilisateur.

De façon avantageuse, le dispositif comprend en outre une pluralité de capteurs de vibration destinés à être montés à des positions différentes à l'intérieur de l'aéronef, chacun des capteurs de vibration étant configuré pour mesurer en temps réel des signaux vibratoires,
l'unité centrale étant configurée en outre pour recevoir en temps réel les signaux vibratoires mesurés par les capteurs de vibration ;
l'unité de stockage étant configurée pour enregistrer en temps réel les signaux vibratoires mesurés reçus par l'unité centrale ;
l'unité de calcul étant configurée pour générer une cartographie sonore à partir des signaux acoustiques mesurés, des positions des microphones, des signaux vibratoires mesurés et des positions des capteurs de vibration.

En outre, l'unité centrale est configurée en outre pour recevoir en temps réel des paramètres de vol de l'aéronef.

Avantageusement, le dispositif comprend en outre une unité de visualisation configurée pour afficher en temps réel une représentation graphique d'au moins un des paramètres suivants : des signaux acoustiques mesurés, des positions des microphones, des signaux vibratoires mesurés et des positions des capteurs de vibration, des paramètres de vol de l'aéronef.

Par ailleurs, le dispositif comprend en outre une unité de téléversement configurée pour téléverser vers l'unité de calcul au moins les signaux acoustiques mesurés et les positions des microphones.

De plus, l'unité de téléversement est configurée pour téléverser vers l'unité de calcul en outre les signaux vibratoires mesurés et les positions des capteurs de vibration. En outre, l'unité de téléversement est configurée pour téléverser vers l'unité de calcul les paramètres de vol de l'aéronef.

### Brève description des figures

Les figures annexées feront bien comprendre comment l'invention peut être réalisée. Sur ces figures, des références identiques désignent des éléments semblables.
La figure 1 est une vue schématique du dispositif de diagnostic sonore.
La figure 2 représente deux vues de dessus (a) et (b) de l'intérieur de cabines d'aéronefs à bord desquels sont installés la pluralité de microphones et de capteurs de vibration.
La figure 3 est un ordinogramme schématique du procédé de diagnostic sonore.

### Description détaillée

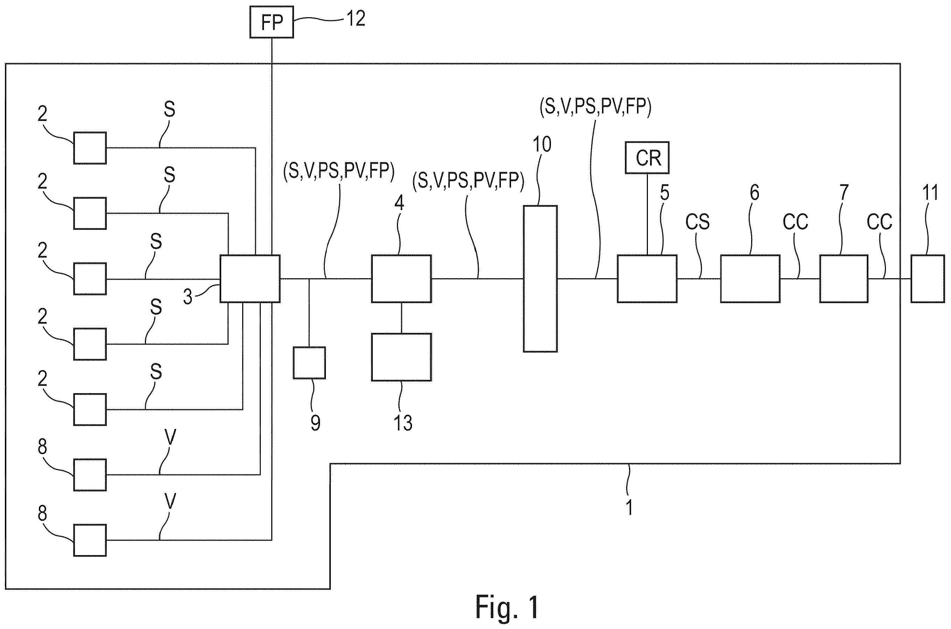

Le dispositif 1 de diagnostic sonore d'un aéronef AC (ci-après appelé « dispositif 1 ») est représenté schématiquement sur la figure 1.

Le dispositif 1 comprend au moins une pluralité de microphones 2, une unité centrale 3, une unité de stockage 4, une unité de calcul 5, une unité de comparaison 6 et une unité de transmission 7.

Les microphones 2 de la pluralité de microphones 2 sont destinés à être montés à des positions PS différentes à l'intérieur de l'aéronef AC. Chacun des microphones 2 est configuré pour mesurer en temps réel un signal acoustique S.

Par exemple, les microphones 2 sont basés sur la technologie des systèmes microélectromécaniques MEMS (pour « Microelectromechanical systems » en anglais). Ils peuvent être encapsulés chacun dans des barrettes mécaniques et électroniques. Ces barrettes peuvent alors être montées sur des supports fixés aux différentes positions PS à l'intérieur de l'aéronef AC.

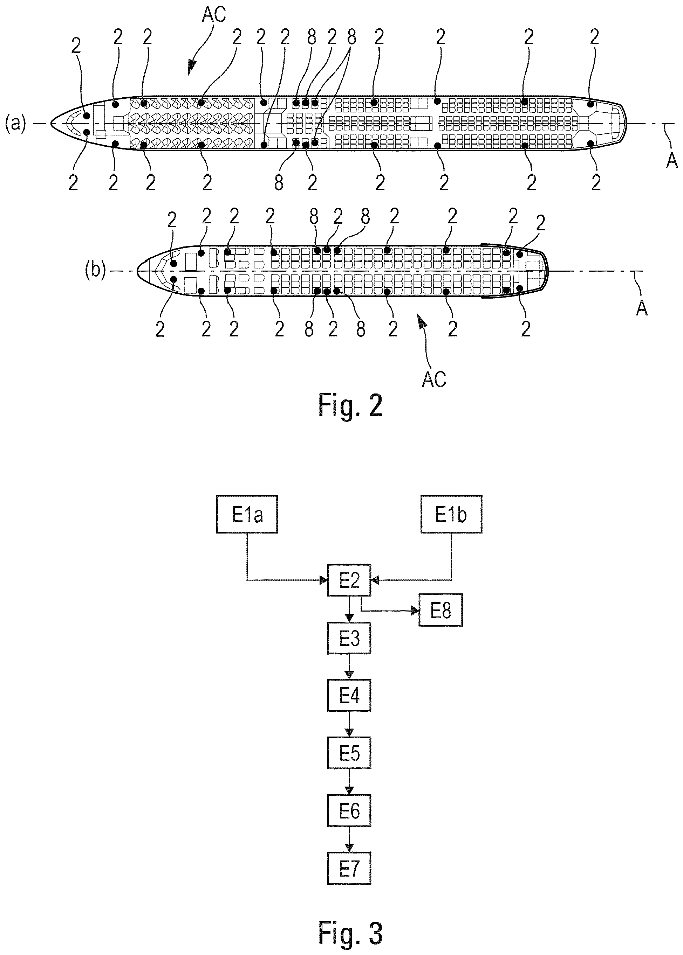

La figure 2 représente deux aéronefs AC différents illustrant chacun deux exemples (a) et (b) de répartition des positions PS des microphones 2. Comme représenté sur ces deux figures (a) et (b), les microphones 2 peuvent être répartis symétriquement par rapport à un plan A vertical de symétrie de l'aéronef AC. À titre d'exemple non limitatif, la pluralité de microphones 2 comporte de vingt à trente microphones 2. Dans les exemples de la figure 2, la pluralité de microphones 2 comporte vingt microphones 2. Dans ces exemples, huit microphones peuvent être installés aux huit portes de l'aéronef AC symétriquement par rapport au plan A vertical de symétrie : aux portes principales et aux issues d'évacuation sur l'aile (« overwing exit » en anglais). Deux microphones peuvent être installés au poste de pilotage (« cockpit » en anglais) symétriquement : à la place du pilote et à la place du copilote. Dix microphones peuvent être installés dans la cabine de l'aéronef AC symétriquement : au niveau du premier rang de sièges, au niveau du dernier rang de sièges et espacés régulièrement entre le premier range de sièges et le deuxième rang de sièges.

Selon une variante, les microphones sont positionnés de manière aléatoire à l'intérieur de l'aéronef AC.

L'unité centrale 3 est configurée pour recevoir les signaux acoustiques S mesurés par les microphones 2. Chaque signal acoustique S peut être associé à la position PS dans l'aéronef AC du microphone 2 ayant capté le signal acoustique S. L'unité centrale 3 peut recevoir les signaux acoustiques S des microphones 2 via une liaison sans fil, de type Wi-Fi.

L'unité de stockage 4 est configurée pour enregistrer en temps réel les signaux acoustiques S mesurés reçus par l'unité centrale 3. L'unité de stockage 4 peut également stocker la position PS de chacun des microphones 2 ayant capter chacun des signaux acoustiques S respectivement.

L'unité de calcul 5 est configurée pour générer une cartographie sonore CS à partir des signaux acoustiques S mesurés et des positions PS des microphones 2. Une cartographie sonore peut correspondre à une représentation en deux dimensions ou en trois dimensions de niveaux de bruit (par exemple exprimés en décibels). L'unité de calcul 5 permet donc d'obtenir une cartographie sonore CS en fonction du temps à partir de mesures en temps réel. On peut donc observer l'évolution temporelle des bruits à bord de l'aéronef AC à partir de cette cartographie sonore CS.

L'unité de comparaison 6 est configurée pour générer une cartographie de comparaison CC à partir d'une comparaison entre la cartographie sonore CS et une cartographie de référence CR.

À titre d'exemple, la cartographie de référence CR peut correspondre à une cartographie sonore réalisée par apprentissage sur un nombre prédéterminé d'aéronefs. Elle peut aussi correspondre à une cartographie sonore, à deux dimensions ou à trois dimensions, déterminée à partir d'un modèle numérique.

La cartographie de comparaison CC peut correspondre à une cartographie à deux dimensions ou à trois dimensions comportant des rapports entre la cartographie sonore CS et la cartographie de référence CR. L'unité de comparaison 6 permet donc d'obtenir une cartographie de comparaison CC en fonction du temps à partir de la cartographie sonore CS. On peut donc également observer l'évolution temporelle des bruits à bord de l'aéronef AC à partir de cette cartographie de comparaison CC.

L'unité de transmission 7 est configurée pour transmettre la cartographie de comparaison CC à un dispositif utilisateur 11. De façon non limitative, le dispositif utilisateur 11 peut correspondre à un dispositif de traitement de donnée ou à un dispositif d'affichage permettant de visualiser la cartographie de comparaison. Avantageusement, le dispositif 1 comprend en outre une pluralité de capteurs de vibration 8 destinés à être montés à des positions PV différentes à l'intérieur de l'aéronef AC. Chacun des capteurs de vibration 8 est configuré pour mesurer en temps réel des signaux vibratoires V. Par exemple, les capteurs de vibration 8 correspondent à des accéléromètres.

Les deux exemples (a) et (b) de la figure 2 représente chacun une répartition des positions PV des capteurs de vibration 8. Comme représenter sur ces deux figures (a) et (b), les capteurs de vibration 8 peuvent être répartis symétriquement par rapport au plan A vertical de symétrie de l'aéronef AC. À titre d'exemple non limitatif, la pluralité de capteurs de vibration 8 comporte quatre capteurs de vibration 8. Dans cet exemple, les quatre capteurs de vibrations 8 sont répartis à mi-chemin entre les deux extrémités de la cabine. Deux de ces quatre capteurs de vibration 8 sont destinés à mesurer les vibrations produites par les moteurs. Les deux autres capteurs de vibration 8 sont destinés à mesurer les vibrations au niveau des carénages de Karman qui facilitent l'écoulement de l'air à l'emplanture de l'aile et du fuselage de l'aéronef AC.

L'unité centrale 3 est alors configurée pour recevoir en outre en temps réel les signaux vibratoires V mesurés par les capteurs de vibration 8. Chaque signal vibratoire V peut être associé à la position PV dans l'aéronef AC du capteur de vibration 8 ayant capté le signal vibratoire V. L'unité centrale 3 peut recevoir les signaux vibratoires V des capteurs de vibration 8 via une liaison sans fil, de type Wi-Fi.

De même, l'unité de stockage 4 est alors configurée pour enregistrer en temps réel les signaux vibratoires V mesurés reçus par l'unité centrale 3. L'unité de stockage 4 peut également stocker la position PV de chacun des capteurs de vibration 8 ayant capté chacun des signaux vibratoires V respectivement.

L'unité de calcul 5 est configurée pour générer une cartographie sonore CS à partir des signaux acoustiques S mesurés, des positions PS des microphones 2, des signaux vibratoires V mesurés et des positions PV des capteurs de vibration 8. L'unité de calcul 5 peut utiliser les signaux vibratoires V et la position des capteurs de vibration 8 pour filtrer les signaux acoustiques S qui sont causés par des vibrations normales.

L'unité de calcul 5 permet d'obtenir une cartographie sonore CS en fonction du temps. On peut donc observer l'évolution temporelle des bruits à bord de l'aéronef AC.

L'unité centrale 3 peut être également configurée pour recevoir en temps réel des paramètres de vol FP de l'aéronef AC. Ces paramètres de vol peuvent correspondre en particulier à l'altitude, à la vitesse et à la pression de l'aéronef AC. Ils peuvent être acquis par l'unité centrale 3 via un bus avionique 12 ou bien via une liaison sans fil de télécommunication permettant l'échange bidirectionnel de données à courte distance, de type Bluetooth. L'unité de stockage 4 est alors configurée pour enregistrer en temps réel les paramètres de vol FP reçus par l'unité centrale 3. L'unité de stockage 4 peut être connectée à une horloge 13 (par exemple de type serveur NTP) destinée à synchroniser les données (signaux acoustiques S, positions PS des microphones 2, signaux vibratoires V, positions PV des capteurs de vibration 8, paramètres de vol FP, etc.) enregistrées dans l'unité de stockage 4. L'unité de stockage 4 peut être connectée à l'horloge 13 via une liaison sans fil, de type Wi-Fi.

Le dispositif 1 peut en outre comprendre une unité de visualisation 9 configurée pour afficher en temps réel une représentation graphique d'au moins un des paramètres suivants : des signaux acoustiques S mesurés, des positions PS des microphones 2, des signaux vibratoires V mesurés et des positions PV des capteurs de vibration 8, des paramètres de vol FP de l'aéronef AC.

Dans un premier mode de réalisation, l'unité centrale 3, l'unité de stockage 4, l'unité de calcul 5, l'unité de comparaison 6 et l'unité de transmission 7 sont destinées à être installées à bord de l'aéronef AC.

Dans un deuxième mode de réalisation, l'unité centrale 3 et l'unité de stockage 4 sont destinées à être installées à bord de l'aéronef AC. L'unité de calcul 5, l'unité de comparaison 6 et l'unité de transmission 7 sont destinées à être installées au sol. Dans ce deuxième mode de réalisation, le dispositif 1 comprend en outre une unité de téléversement 10 configurée pour téléverser vers l'unité de calcul 5 au moins les signaux acoustiques S mesurés et les positions PS des microphones 2. Elle peut aussi être configurée pour téléverser vers l'unité de calcul 5 les signaux vibratoires V mesurés et les positions PV des capteurs de vibration 8. Elle peut également être configurée pour téléverser vers l'unité de calcul 5 les paramètres de vol FP de l'aéronef AC. L'unité de téléversement 10 peut téléverser ces paramètres lorsque l'aéronef AC est au sol. L'unité de téléversement 10 peut être connectée à l'unité de calcul 5 via une liaison filaire.

Dans un troisième mode de réalisation, l'unité central 3, l'unité de stockage 4, l'unité de calcul 5 sont destinées à être installées à bord de l'aéronef AC. L'unité de comparaison 6 et l'unité de transmission 7 sont destinées à être installées au sol. L'invention concerne également un procédé de diagnostic sonore d'un aéronef AC (figure 3).

Le procédé comprend les étapes suivantes :
- une étape E1a de mesure en temps réel de signaux acoustiques S par la pluralité de microphones ;
- une étape E2 de réception, mise en oeuvre par l'unité centrale 3, comportant la réception des signaux acoustiques S mesurés par les microphones 2 ;
- une étape E3 d'enregistrement en temps réel, mise en oeuvre par l'unité de stockage 4, comportant l'enregistrement en temps réel des signaux acoustiques S mesurés reçus par l'unité centrale 3 ;
- une étape E5 de calcul, mise en oeuvre par l'unité de calcul 5, comportant la génération de la cartographie sonore CS à partir des signaux acoustiques S mesurés et des positions PS des microphones 2 ;
- une étape E6 de comparaison, mise en oeuvre par l'unité de comparaison 6, comportant la génération de la cartographie de comparaison CC à partir d'une comparaison entre la cartographie sonore CS et la cartographie de référence CR ;
- une étape E7 de transmission, mise en oeuvre par l'unité de transmission 7, comportant la transmission de la cartographie de comparaison CC au dispositif utilisateur 11.

Le procédé peut comprendre en outre une étape E1b de mesure en temps réel de signaux vibratoires V par la pluralité de capteurs de vibration 8. Dans ce cas, l'étape E2 de réception comporte en outre la réception en temps réel des signaux vibratoires V mesurés par les capteurs de vibration. L'étape E3 d'enregistrement comporte en outre l'enregistrement en temps réel des signaux vibratoires V mesurés reçus par l'unité centrale 3. La génération de la cartographie sonore CS dans l'étape de calcul E4 est réalisée à partir des signaux acoustiques S mesurés, des positions PS des microphones 2, des signaux vibratoires V mesurés et des positions PV des capteurs de vibration 8.

L'étape E2 de réception peut comporter en outre l'enregistrement en temps réel de paramètres de vol FP de l'aéronef AC.

Le procédé peut comprendre en outre une étape E8 de visualisation, mise en oeuvre par l'unité de visualisation 9, comportant l'affichage en temps réel d'une représentation graphique d'au moins un des paramètres suivants : des signaux acoustiques S mesurés, des positions PS des microphones 2, des signaux vibratoires V mesurés, des positions PV des capteurs de vibration 8, des paramètres de vol FP de l'aéronef AC. Dans un mode de réalisation, l'étape E8 de visualisation suit l'étape E2 de réception.

Selon le deuxième mode de réalisation, le procédé comprend en outre une étape E4 de téléversement, mise en oeuvre par l'unité de téléversement 10, comprenant le téléversement vers l'unité de calcul 5 au moins des signaux acoustiques S mesurés et des positions PS des microphones 2.

L'étape E4 de téléversement peut comprendre le téléversement vers l'unité de calcul 5 en outre des signaux vibratoires V mesurés, des positions PV des capteurs de vibration 8.

L'étape E4 de téléversement peut comprendre le téléversement vers l'unité de calcul 5 en outre des paramètres de vol FP de l'aéronef AC.

Le dispositif 1 peut être utiliser dans différentes applications.

En particulier, pendant un vol, les membres d'équipage utilisent généralement un système de microphone portatif afin de réaliser des enregistrements de bruits. Ces enregistrements durent approximativement 30 secondes et sont réalisés à l'endroit où les membres d'équipage entendent les bruits et à l'endroit où ils jugent avoir trouvé la source des bruits. La présence du dispositif 1 permet d'obtenir plus d'informations, telles que le contexte du bruit. Par exemple le dispositif permet de savoir si d'autres bruits sont apparus avant le début des enregistrements réalisés par les membres d'équipage à l'aide du système de microphone portatif.

Dans une autre application, le dispositif 1 permet de s'assurer que chaque aéronef d'un même type présente une même cartographie sonore.

Dans une autre application, le dispositif 1 permet également de vérifier pendant un temps donné l'évolution d'un système particulièrement sensible ou un système connu pour être bruyant. Dans ce cas, une surveillance de routine peut être réalisée sur un microphone 2 particulier (par exemple, proche du système dont on surveille l'évolution). Cette surveillance de routine permet d'étudier l'évolution sonore du système. Une alerte peut être alors lancée si le système devient trop bruyant. Dans une autre application, le dispositif 1 peut être utilisé pour comparer des niveaux de bruit entre deux aéronefs différents fonctionnant dans des conditions identiques ou bien pour décider si un niveau de bruit dans un aéronef AC est acceptable pour une compagnie aérienne. Les niveaux de bruit peuvent être mesurés par la pluralité de microphones 2 ou une partie de la pluralité de microphones 2 dans une zone de l'aéronef AC.

Dans une autre application, la cartographie sonore obtenue par le dispositif 1 peut être utilisée pour généraliser la surveillance de tous les aéronefs AC d'une flotte. Ladite cartographie permet de connaître les zones silencieuses et les zones bruyantes afin de trouver des solutions pour réduire ces zones bruyantes. Elle permet également de s'assurer qu'il n'y a pas de dérive acoustique de la flotte ou qu'il n'y a pas l'apparition de nouveaux bruits avec le temps. Elle permet également d'expliquer les périodes de « crise » où des bruits similaires apparaissent le plus fréquemment.

## Revendications

1. Procédé de diagnostic sonore d'un aéronef,
**caractérisé en ce qu'**il comprend les étapes suivantes :
- une étape (E1a) de mesure en temps réel de signaux acoustiques (S) par une pluralité de microphones (2) destinés à être montés à des positions (PS) différentes à l'intérieur de l'aéronef (AC) ;
- une étape (E2) de réception, mise en oeuvre par une unité centrale (3), comportant la réception des signaux acoustiques (S) mesurés par les microphones (2) ;
- une étape (E3) d'enregistrement en temps réel, mise en oeuvre par une unité de stockage (4), comportant l'enregistrement en temps réel des signaux acoustiques (S) mesurés reçus par l'unité centrale (3) ;
- une étape (E5) de calcul, mise en oeuvre par une unité de calcul (5), comportant la génération d'une cartographie sonore (CS) à partir des signaux acoustiques (S) mesurés et des positions (PS) des microphones (2) ;
- une étape (E6) de comparaison, mise en oeuvre par une unité de comparaison (6), comportant la génération d'une cartographie de comparaison (CC) à partir d'une comparaison entre la cartographie sonore (CS) et une cartographie de référence (CR) ;
- une étape (E7) de transmission, mise en oeuvre par une unité de transmission (7), comportant la transmission de la cartographie de comparaison (CC) à un dispositif utilisateur (11).

2. Procédé selon la revendication 1,
**caractérisé en ce qu'**il comprend en outre une étape (E1b) de mesure en temps réel de signaux vibratoires (V) par une pluralité de capteurs de vibration (8) destinés à être montés à des positions (PV) différentes à l'intérieur de l'aéronef (AC) ;
l'étape (E2) de réception comportant en outre la réception en temps réel des signaux vibratoires (V) mesurés par les capteurs de vibration (8) ;
l'étape (E3) d'enregistrement comportant en outre l'enregistrement en temps réel des signaux vibratoires (V) mesurés reçus par l'unité centrale (3) ;
la génération de la cartographie sonore (CS) dans l'étape de calcul (E4) étant réalisée à partir des signaux acoustiques (S) mesurés, des positions (PS) des microphones (2), des signaux vibratoires (V) mesurés et des positions (PV) des capteurs de vibration (8).

3. Procédé selon l'une des revendications 1 et 2,
**caractérisé en ce que** l'étape (E2) de réception comporte en outre l'enregistrement en temps réel de paramètres de vol (FP) de l'aéronef (AC).

4. Procédé selon l'une des revendications 1 à 3,
**caractérisé en ce qu'**il comprend en outre une étape (E8) de visualisation, mise en oeuvre par une unité de visualisation (9), comportant l'affichage en temps réel d'une représentation graphique d'au moins un des paramètres suivants : des signaux acoustiques (S) mesurés, des positions (PS) des microphones (2), des signaux vibratoires (V) mesurés et des positions (PV) des capteurs de vibration (8), des paramètres de vol (FP) de l'aéronef (AC).

5. Procédé selon l'une quelconque des revendications 1 à 4,
**caractérisé en ce qu'**il comprend en outre une étape (E4) de téléversement, mise en oeuvre par une unité de téléversement (10), comprenant le téléversement vers l'unité de calcul (5) au moins des signaux acoustiques (S) mesurés et des positions (PS) des microphones (2).

6. Procédé selon la revendication 5,
**caractérisé en ce que** l'étape (E4) de téléversement comprend le téléversement vers l'unité de calcul (5) en outre des signaux vibratoires (V) mesurés, des positions (PV) des capteurs de vibration (8).

7. Procédé selon l'une quelconque des revendications 5 et 6,
**caractérisé en ce que** l'étape (E4) de téléversement comprend le téléversement vers l'unité de calcul (5) en outre des paramètres de vol (FP) de l'aéronef (AC).

8. Dispositif de diagnostic sonore d'un aéronef,
**caractérisé en ce qu'**il comporte :
- une pluralité de microphones (2) destinés à être montés à des positions (PS) différentes à l'intérieur de l'aéronef (AC), chacun des microphones (2) étant configuré pour mesurer en temps réel un signal acoustique (S) ;
- une unité centrale (3) configurée pour recevoir les signaux acoustiques (S) mesurés par les microphones (2) ;
- une unité de stockage (4) configurée pour enregistrer en temps réel les signaux acoustiques (S) mesurés reçus par l'unité centrale (3) ;
- une unité de calcul (5) configurée pour générer une cartographie sonore (CS) à partir des signaux acoustiques (S) mesurés et des positions (PS) des microphones (2) ;
- une unité de comparaison (6) configurée pour générer une cartographie de comparaison (CC) à partir d'une comparaison entre la cartographie sonore (CS) et une cartographie de référence (CR) ;
- une unité de transmission (7) configurée pour transmettre la cartographie de comparaison (CC) à un dispositif utilisateur (11).

9. Dispositif selon la revendication 8,
**caractérisé en ce qu'**il comprend en outre une pluralité de capteurs de vibration (8) destinés à être montés à des positions (PV) différentes à l'intérieur de l'aéronef (AC), chacun des capteurs de vibration (8) étant configuré pour mesurer en temps réel des signaux vibratoires (V),
l'unité centrale (3) étant configurée en outre pour recevoir en temps réel les signaux vibratoires (V) mesurés par les capteurs de vibration (8) ;
l'unité de stockage (4) étant configurée pour enregistrer en temps réel les signaux vibratoires (V) mesurés reçus par l'unité centrale (3) ;
l'unité de calcul (5) étant configurée pour générer une cartographie sonore (CS) à partir des signaux acoustiques (S) mesurés, des positions (PS) des microphones (2), des signaux vibratoires (V) mesurés et des positions (PV) des capteurs de vibration (8).

10. Dispositif selon l'une des revendications 8 et 9,
**caractérisé en ce que** l'unité centrale (3) est configurée en outre pour recevoir en temps réel des paramètres de vol (FP) de l'aéronef (AC).

11. Dispositif selon l'une des revendications 8 à 10,
**caractérisé en ce qu'**il comprend en outre une unité de visualisation (9) configurée pour afficher en temps réel une représentation graphique d'au moins un des paramètres suivants : des signaux acoustiques (S) mesurés, des positions (PS) des microphones (2), des signaux vibratoires (V) mesurés et des positions (PV) des capteurs de vibration (8), des paramètres de vol (FP) de l'aéronef (AC).

12. Dispositif selon l'une quelconque des revendications 8 à 11,
**caractérisé en ce qu'**il comprend en outre une unité de téléversement (10) configurée pour téléverser vers l'unité de calcul (5) au moins les signaux acoustiques (S) mesurés et les positions (PS) des microphones (2).

13. Dispositif selon la revendication 12,
**caractérisé en ce que** l'unité de téléversement (10) est configurée pour téléverser vers l'unité de calcul (5) en outre les signaux vibratoires (V) mesurés et les positions (PV) des capteurs de vibration (8).

14. Dispositif selon l'une quelconque des revendications 12 et 13,
**caractérisé en ce que** l'unité de téléversement (10) est configurée pour téléverser vers l'unité de calcul (5) en outre les paramètres de vol (FP) de l'aéronef (AC).
